# EUROPEAN PATENT APPLICATION

(11) **EP 2 051 495 A1**
(43) Date of publication of application: **22.04.2009**
(21) Application number: 09151771.4
(22) Date of filing: 09.11.2007
(51) Int. Cl.: H04M 3/436, H04M 3/38, H04L 12/58, H04M 3/42

(54) **Method and system for establishing a telephone connection**

(30) Priority: 08.02.2007 NL 1033356
(62) Divisional of application: 07120422.6
(71) Applicant: DLB Finance & Consultancy B.V., 4874 LV Etten-Leur (NL); HITD Information Technology B.V., 3181 NM Rozenburg (NL)
(72) Inventor: Benschop, Dirk Leonard, 4874 LV Etten-Leur (NL); Benschop, Henderik Reinout, 3181 NM Rozenburg (NL)
(74) Representative: van Looijengoed, Ferry Antoin Theodorus

(57) **Abstract**

The invention relates to a method and system for establishing a telephone connection between a first subscriber device (A-subscriber device) and a second subscriber device (B-subscriber device) in a telephone system. The telephone system is arranged for connecting the A-subscriber device (the calling party) and the B-subscriber device (the called party). The method includes receiving a request from the A-subscriber device to establish a connection with the B-subscriber device and also receiving a personal identity code of a user of said A-subscriber device. The connection can be established between the A-subscriber device and the B-subscriber device only after having received said personal identity code of said user of said A-subscriber device. After receiving one or more access restriction signals, access may be restricted for the user of the A-subscriber device in response to receiving the one or more access restriction signals.

## Description

### FIELD OF THE INVENTION

The invention relates to the field of establishing a telephone connection. More specifically, the invention relates to the field of establishing a telephone connection between a first subscriber device (A-subscriber device) and a second subscriber device (B-subscriber device) in a telephone system arranged for connecting said A-subscriber device and B-subscriber device.

### BACKGROUND OF THE INVENTION

Telephone calls are progressively experienced as intrusions in the daily life of people. Even more than e.g. e-mail spam messages, unsolicited telephone calls are considered undesired, time-consuming and annoying. Furthermore, the field of e-mail spam prevention has seen considerable development, whereas filters for unsolicited telephone calls appear to have advanced less.

Therefore, various options have been considered in reducing unsolicited telephone calls.

US 2006/0147014 discloses a telephone handling list for multiple users. The handling of incoming phone calls includes receiving an indication from one or more call recipients reflecting a desire to block future calls from a call source. The call source is identified by the phone number of the call source. A number of received indications reflecting a desire to block future calls from the call source is determined and compared to a threshold. An identifier of the call source is added to a list of call sources from which future calls are specially handled when the number of indications meets the threshold. Handling an incoming call from an undesired call source includes receiving an indication of a call placed to a call recipient. A source of the call is identified. Whether the identified call source is included in the list of call sources from which future calls are specially handled is determined. Special handling is applied to the call when the identified call source is included in the list.

The method of the prior art can be circumvented easily by using another call source, i.e. another telephone number. There exists a need in the art for an improved method of reducing unsolicited telephone calls.

US 2005/111648 discloses a multi-stage telephone number dialing system and method of "semi-listed" numbers that provides limited and selective access of individuals to a telephone subscriber. When a semi-listed number is called, a recorded announcement is played to the caller requesting that the caller enter an authorization code or "PIN" (Personal Identification Number). One of a number of possible actions is then performed based on the entered PIN, illustratively determined by a database lookup. Actions which may be taken include connecting the incoming call through to the subscriber and disconnecting the call.

US 2003/112948 discloses a system and method for establishing a voice (or data) connection between two parties based on their availability. The system receives from a first subscriber a call request involving a second subscriber. The second subscriber may be identified by telephone number or other identifier. The system automatically detects the availability of the second subscriber through subscriber input, proactive availability testing, a tool executing on the subscriber's computing or communication device, etc. When the first subscriber and second subscriber are determined to be available, the system signals a call processor to establish a voice connection between them. Subscribers may configure various preferences, including default rules regarding their availability for all or certain types of calls.

### SUMMARY OF THE INVENTION

It is an object of the present invention to provide a method and system that improves the prior art method and system of reducing unsolicited telephone calls.

To that end, a method is disclosed as defined in claim 1.

The applicant also proposes one or more computer programs and a carrier containing one or more of these computer programs for carrying out the method.

Furthermore, a telephone system as defined in claim 14 is disclosed.

It should be appreciated that the telephone system may include a system or network of a conventional fixed system (e.g POTS), a mobile or wireless telecommunication system, combinations thereof as well as internet telephony using e.g. voice over IP techniques (VoIP).

It should further be appreciated that the personal identity code may comprise one or more parts.

It should also be appreciated that the telephone system does not necessarily refer to a client-server system. The invention may also be applicable in peer-to-peer networks, such as e.g. used for bittorrent applications, wherein a telephone system or (some) functionality may be considered to be part of one of more of the user devices participating in the peer-to-peer network.

By receiving a personal identity code of a user, the telephone system is able to actually recognize the person that is requesting services of the system instead of only recognizing the device that is used. Consequently, the telephone system can apply measures to a particular user instead of only to a device as a result of the received authentication information. In other words, measures applied to a particular users cannot be avoided or circumvented by using a different device. In particular, the user of the B-subscriber device is provided with the possibility to restrict access to the telephone system for the *user* of the A-subscriber device if the telephone call is perceived by the user of the B-subscriber device as unsolicited or undesired. Access is restricted on the basis of the personal identity code of the user of the A-subscriber device and, therefore, this user cannot simply circumvent this measure by using a different A-subscriber device. The personal identity code may e.g. be stored such that further attempts to establish a connection by the person owning the code are first checked against this storage before a connection can be established.

It should be appreciated, however, that access restrictions may only apply if more than a single access restriction signal has been received for a particular user, either from the user of the same B-subscriber device or from users of other B-subscriber devices during other calls.

The telephone system may be arranged for storing at least a personal identity code of a user of said A-subscriber device. It may then be determined if said received personal identity code matches said stored personal identity code and a connection is established with said B-subscriber device only if said received personal identity code matches said stored personal identity code. The telephone system may comprise a storage module for storing at least a personal identity code of a user of said A-subscriber device and a determination module adapted for determining if said personal identity code received by said identity code receiver matches the personal identity code stored by said storage module. The telephone system may be adapted such that said connection establisher only establishes said connection with said B-subscriber device if said personal identity code received by said receiver matches said personal identity code stored by said storage module. Such a system provides the advantage of a subscriber-only telephone system.

The telephone system may also receive a device code of the A-subscriber device, using e.g. a device code receiver. This provides the advantage that the A-subscriber device code (e.g. the telephone number) can be coupled to the personal identity code.

The telephone system may be arranged for storing at least a personal identity code of a user of said B-subscriber device. A telephone number of said B-subscriber device is received with said request for establishing said connection. The connection is only established if said telephone system has stored said personal identity code of said user of said B-subscriber device for said received telephone number. To that end, the telephone system has a storage module for storing at least a personal identity code of a user of said B-subscriber device. A request receiver is adapted for filtering a telephone number of said B-subscriber device from said request for establishing said connection. The telephone system is arranged such that said connection establisher establishes said connection only if said storage module has stored said personal identity code of said user of said B-subscriber device for said received telephone number. Such a method and system allows the user of the A-subscriber device to call the B-subscriber subscriber device only if the user of the B-subscriber device is known by the telephone system by his or her personal identity code.

The embodiments of claims 2 and 10 define measures for restricting the access to the telephone system. As an example, if multiple calls were made in parallel (e.g. from a call centre), all these calls can be terminated. Also, further (future) connections can be prevented at least temporarily.

The embodiments of claims 3 and 11 provides several mechanisms for mitigating restriction of the access rights to the telephone system. In particular, the applicant proposes to restrict access to the telephone system for the user of the A-subscriber device for which the at least one access restriction signal was received in dependence of a communication history between said user and said user of the B-subscription device from which the access restriction signal was received. As an example, access restriction to the telephone system may be performed immediately if the user of the A-subscriber device is unknown to the user of the B-subscriber device (e.g. if the users have not called each other previously). However, if the calling party and called party know each other, access to the telephone system is not restricted at once (but possibly only after several access restriction signals have been received for different telephone calls). The communication history between users of the telephone system can be traced on the basis of the received personal identity codes.

The embodiments of claims 4 and 12 provides another measure for mitigating access restriction to the telephone system for the user of the A-subscriber device.

The telephone system may comprise a warning signal provider for providing a warning signal to said user of said A-subscriber device. Such a system may provide the advantage that the user of the A-subscriber device may be warned in advance of the access restriction. A pre-programmed warning signal may be provided.

The embodiments of claims 5 and 13 allow that the recipient of a telephone call determines whether other future recipients may receive telephone calls from the user of the A-subscriber device.

The embodiments of claims 6 and 14 prevent sniffing of personal identity codes. Secured communication can be obtained by e.g. encrypting data and/or by using secure connections.

The system and method may also be adapted for
- receiving a first approval signal from a user of said A-subscriber device for telephone communication with a user of said B-subscriber device;
- receiving a second approval signal from the user of said B-subscriber device for telephone communication with the user of said A-subscriber device;
- establishing said connection only if both the first and second approval signal have been received.
Such a system and method provide subscribers with the possibility to approve telephone communication with each other prior to establishing the telephone connection. In particular, users may use their telephones to dial each others number (possibly in combination with the personal identity codes). If the telephone system receives the telephone numbers and the personal identity, the approval may be deemed to be given. Reference is made to a co-pending international patent application of the applicant ("Method and system for prior approval of telephone communication") filed on the same date as the present application, the contents of the international application being incorporated in the present application by reference in its entirety.

The invention also relates to a telephone device for use in the method and system as described above. In particular, the telephony device should be adapted to issue the personal identity code to the telephone system for setting up the connection and/or possibly an access restriction signal for restricting access for another subscriber, such as the A-subscriber.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a communication system for performing a method according to an embodiment of the invention;
FIG. 2 is a schematic illustration of a telephone system according to an embodiment of the invention;
FIG. 3 is a schematic illustration of a telephone device according to an embodiment of the invention;
FIG. 4 is a time diagram illustrating steps of a method according to a first embodiment of the invention;
FIG. 5 is a time diagram illustrating steps of a method according to a second embodiment of the invention;
FIG. 6 is a time diagram illustrating steps of a method according to a third embodiment of the invention; and
FIG. 7 is a time diagram illustrating steps of a method according to a fourth embodiment of the invention.

### DETAILED DESCRIPTION OF THE DRAWINGS

Details about telecommunication infrastructures and procedures for establishing and terminating a telephone connection are assumed to be known to the skilled person and will not be described. As an example, for GSM telephony, reference is made to the book "The GSM System for Mobile Communications" by M. Mouly and M. Pautet, 1992 (ISBN 2-9057190-0-7). For UMTS telephony, reference is made to the book "WCDMA for UMTS"; edited by Harri Holma and Antti Toskala, 2001 (ISBN 0 471 48687 6).

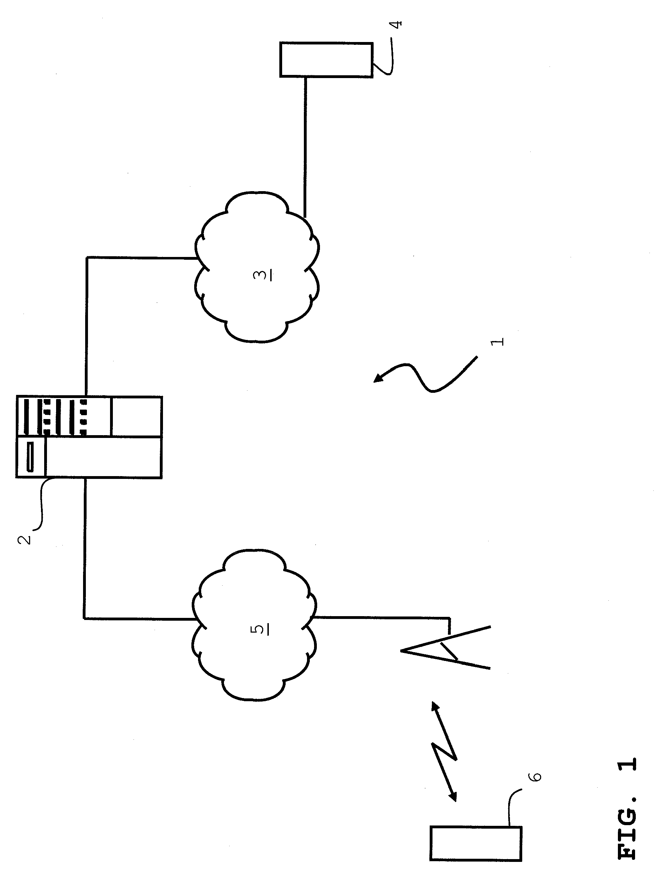

FIG. 1 shows a telephone infrastructure 1 comprising a telephone system 2. The telephone system 2, which may e.g. comprise a server, is connected via a first telecommunication network 3 to an A-subscriber device 4 and via a second telecommunication network 5 to a B-subscriber device 6. The first and second telecommunication networks 3, 5 may comprise one or more wired or wireless networks. In the situation of FIG. 1, the A-subscriber device 4 is connected to the telephone system 2 via a wired network, whereas the B-subscriber device 6 is partly connected via a wireless access network. The telephone infrastructure 1 may also be suitable for internet telephony, including VoIP telephony. The A-subscriber device 4 and B-subscriber device 6 may be any type of device suitable for telephony communication. The telephone system 2 enables the establishment of a telephone connection via the networks 3 and 5 between the A-subscriber device 4 and the B-subscriber device 6. Of course, networks 3 and 5 may be the same network or networks using the same technology. In accordance with telephony convention, the A-subscriber device 4 (the call source) is assumed to be used by the calling party and the B-subscriber device (the call destination)is assumed to be used by the called party.

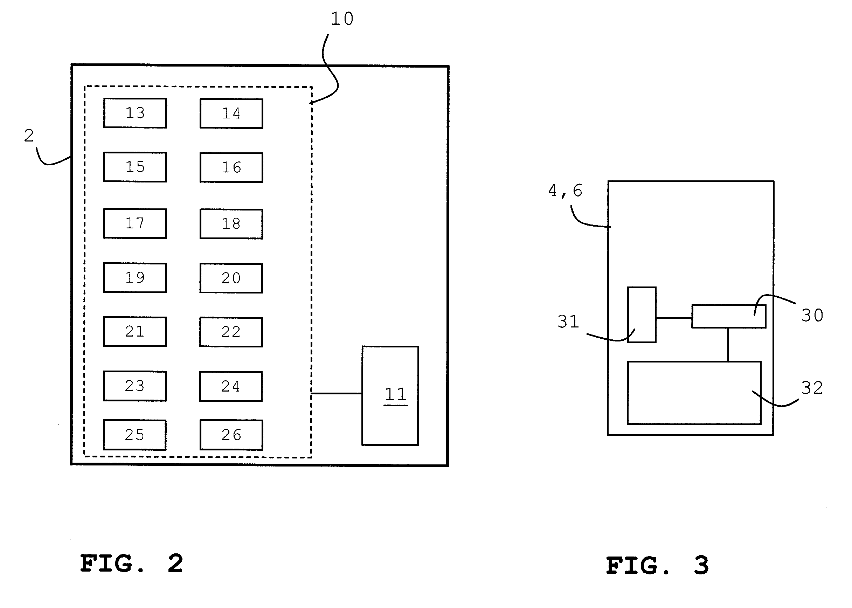

The specific functions of the telephone system 2 are schematically illustrated in FIG. 2 and will now be described in further detail. The telephone system 2 comprises a processor 10 and a memory 11 and is configured to allow communication with both the A-subscriber device and the B-subscriber device via the networks 3, 5. It should be appreciated that the telephone system 2 is normally capable of connecting to more than the two telephone devices shown in FIG. 1. It should also be appreciated that the functions may be largely implemented as software code portions of one or more computer programs executed by the processor 10 (tasks may be distributed over multiple processors).

The telephone server 2 comprises a request receiver 13 adapted for receiving a request from the A-subscriber device 4 to establish a connection with the B-subscriber device 6. The telephone server 2 also comprises an identity code receiver 14 adapted for receiving a personal identity code of a user of the A-subscriber device 4 and a connection establisher 15 adapted for establishing the connection between the A-subscriber device 4 and the B-subscriber device 6 only after receiving the personal identity code of the user of the A-subscriber device 4. Although for individual consumers, each user (or family) preferably owns a unique personal identity code, it may in some case be advantageous to assign a common identity code to groups of users (e.g. companies), such as call centres, in order to allow measures being applied to a call centre in its entirety.

The telephone system also contains a storage module 16 for storing the personal identity code of the user of the A-subscriber device 4. The personal identity code may be prestored in the storage module, e.g. while entering a subscription of the user for use of the telephone system 2. A determination module 17 is provided that is adapted for determining if the personal identity code received by the identity code receiver 14 matches the personal identity code stored by the storage module 16. The processor 10 may be programmed such that the connection establisher 15 only establishes the connection between the A-subscriber device 4 and the B-subscriber device 6 if the personal identity code received by the personal identity code receiver 14 matches the personal identity code stored by the storage module 16.

The telephone system 2 also contains a device code receiver 18 adapted for receiving a code of the A-subscriber device 4. The device code e.g. comprises the telephone number of the A-subscriber device 4, a code similar to a telephone number (e.g. the IMSI) and/or a hardware code (such as the IMEI number or a MAC adress of the A-subscriber device 4). It should be appreciated that the device code may also be a common code of a call centre.

The storage modudule 16 may also be configured for storing at least a personal identity code of a user of the B-subscriber device. Again, the storage module 16 may pre-store such a code on entering the subscription of the user of the B-subscriber device 6 in the telephone system 2. The request receiver 13 may be adapted for filtering a telephone number of the B-subscriber device 6 from the request for establishing the telephone connection. The telephone system 2 may be arranged such that the connection establisher 15 establishes the telephone connection only if the storage module 16 has stored the personal identity code of the user of the B-subscriber device 6 for the received telephone number. This link can e.g. be made via the telephone number of the B-subscriber device 6 that is received by the request receiver 13.

The availability of the personal identity code of the users of the A-subscriber device 4 and/or the B-subscriber device 6 allows the telephone system 2 to identify *users* requesting services from the telephone system 2. The users may be connected to devices by the telephone system 2, e.g. by linking the received personal identity code to one or more known device codes or by receiving the device code from the A-subscriber device 4 and/or B-subscriber device 6 in the process of establishing a connection or during the connection. The availability of the personal identity code (possibly in combination with other identity codes and/or one or more device codes) provides the telephone system 2 with the possibility to trigger actions directed to one or more particular users.

In particular, the telephone system 2 comprises an access restriction receiver 19 adapted for receiving one or more access restriction signals. The telephone system 2 also comprises an access restrictor 20 adapted to restrict access to the telephone system 2 for the user of said A-subscriber device 4 in response to receiving the one or more access restriction signals. If the access restriction receiver 19 receives an access restriction signal (e.g. from the B-subscriber device 6), the telephone system 2 determines the personal identity code of the user of the A-subscriber device 4 that was engaged in the telephone call and for which the access restriction signal was received. The personal identity code is remembered, e.g. by flagging the personal identity code of user of the A-subscriber device 4 (or an associated field) in a database or by storing the personal identity code of the user of the A-subscriber device 4 in a separate register.

There exist various possibilities for restricting access to the telephone system 2.

The telephone system 2 may have a connection terminator 21 adapted for terminating the ongoing connection with the A-subscriber device 4. The connection terminator 21 may also be configured for terminating one or more co-existing connections with the A-subscriber device 4. The latter option may be used if the user of the A-subscriber device 4 for which the access restriction signal was received was engaged in multiple calls. In this situation, each of these calls may be terminated. It should be clear that the user of the A-subscriber device 4 was not necessarily the calling party in all these multiple calls.

In particular, the telephone system 2 may also contain a connection preventor 22 adapted for preventing establishment of further connections for user of said A-subscriber device 4. That is, if the user of the A-subscriber device 4 desires to make another call and if the telephone system 2 identifies the user as being flagged in response to receiving one or more access restrictions signals for this user, the connection preventor 22 prevents that a telephone connection is established with the desired B-subscriber device. It should be clear that this measure cannot be circumvented by using a different A-subscriber device 4, since also for the further call the personal identity code should be sent before, with or following the request for establishing a telephone connection. The telephone system 2 will then determine that a telephone connection should not be set up for this user.

Moreover, the connection preventor 22 may, alternatively or in addition to the measure described in the previous paragraph, prevent that the user of the A-subscriber device 4 is called (i.e. the user of the A-subscriber device 4 is now a calling party). The storage module 16 of the telephone system 2 stores one or more telephone numbers (or associated information) of the A-subscriber device and links one or more of these telephone numbers to the personal identity code. If a request is made to establish a telephone connection with a B-subscriber device, the telephone system 2 determines the personal identity code linked to the telephone number of the A-subscriber device 4. If the telephone system 2 determines that access restrictions apply for the user being assigned this personal identity code, the connection will not be established by using the connection preventor 22. The calling party may be informed of this situation by the telephone system 2.

If a company or another group of people is assigned a common personal identity code, the measures may apply to the company or group. It is also possible to combine a common code of a particular company or group with a personal code of a user within that company or group. Measures may then either apply to the company or group (on the basis of the common personal identity code) and/or to a person of the company or group (on the basis of the personal identity code). As an example, a company may receive a warning signal from the telephone system 2 on the basis of the common personal identity code of the company, while the above measures apply in full to a particular user of that company that was engaged in the telephone call during which the access restriction signal was received. The telephone system 2 is aware of both the company identity code and the personal identity code in such a situation.

It should be appreciated that the measures described in the previous paragraphs do not necessarily apply already in response to a single access restriction signal. The number of access restriction signals before access to the telephone system 2 is restricted may be set. As an example, 50, 25, 10, 5, 2 or 1 acess restriction signals may need to be received by the telephone system 2 for a particular personal identity code before access is restricted to the telephone system 2.

It will be clear that the measures described above can be harsh for a particular user of the A-subscriber device 4. This is particularly true if receipt of a single access restriction signal (or only a few) is sufficient for the telephone system 2 to restrict access. To mitigate this situation, the telephone system 2 comprises an assessor module 23. The assessor module 23 is adapted to control the access restrictor 20 such that restricting access to the telephone system 2 for the user of the A-subscriber device 4 is e.g. dependent on the number of times that access has been restricted for this user and/or the number of access restriction signals that have been received for this user. Also, the telephone system 2 may be configured to restrict access for a particular time period, using a timer 24

In particular, the telephone system 2 is configured to take account of a telephone communication history between the user of the A-subscriber device 4 and the user of the B-subscriber device 6 from which the access restriction signal was received. As an example, access restriction to the telephone system 2 may be performed immediately if the user of the A-subscriber device 4 is unknown to the user of the B-subscriber device 6 (e.g. if the users have not called each other previously) and this user transmits an access restriction signal. However, if the calling party and the called party know each other, access to the telephone system 2 is not restricted at once (but possibly only after several access restriction signals have been received for different telephone calls, either from the same user of the B-subscriber device or from other users). The assessor module 23, therefore, is configured to keep track of past phone calls between users (e.g. on the basis of the personal identity codes of the calling and called parties).

The telephone system 2 may also comprise a warning signal transmitter 25 adapted for providing a warning signal to the user of the A-subscriber device 4 in response to receiving one or more access restriction signals. The warning signal may contain information for the user of the A-subscriber device 4 of possible consequences of further violations. The warning signal may be transmitted to the A-subscriber device 4 or to another device when information is available how this device can be addressed. As an example, if the telephone system 2 has information of an e-mail address of the user of the A-subscriber device 4, the warning message may be transmitted to this e-mail address.

Of course, the telephone system 2 may be capable of connecting multiple subscriber devices. In particular, the telephone system 2 may be arranged for establishing a connection with a first B-subscriber device and with a second B-subscriber device. The access restriction signal receiver 19 may be adapted for receiving an access restriction signal from the first B-subscriber device. The connection preventor 22 can be configured to prevent the second B-subscriber device from receiving telephone calls from a user of the A-subscriber device 4 in response to receiving said one or more access restriction signals. In other words, a called party may determine the access of other future called parties to telephone calls of an A-subscriber device 4 for which one or more asccess restriction signals were received.

The telephone system 2 is arranged for receiving at least the personal identity codes in a secured manner using e.g. secured connections, data encryption techniques or a combination of both. These measures reduce the chance that personal identity codes are intercepted by third parties.

The telephone system 2 comprises an approval module 26 adapted for receiving a first approval signal from a user of A-subscriber device 4 for telephone communication with a user of the B-subscriber device 6 and for receiving a second approval signal from the user of the B-subscriber device 6 for telephone communication with the user of the A-subscriber device 4. The approval module 26 controls the connection establisher 15 such that a telephone connection can be established only if both the first and second approval signal have been received. If an approval signal is received, the timer 24 may be used to set a time limit within which the approval signal of the other user should be received to update the status of the telephone system 2 that a telephone connection is allowed to be established between the users that have mutually approved future telephone calls from each other. It is noted that the approval module 26 may also be applied independently from receiving personal identity codes. As an example, the approval may be based on the telephone numbers of the A-subscriber device 4 and B-subscriber device 6 alone.

FIG. 3 is a schematic illustration of a telephone device, e.g. the A-subscriber device 4 or the B-subscriber device 6 of FIG. 1.

The A-subscriber device 4 contains a processor 30, a memory 31 (e.g. internal memory, a SIM card or another memory card) and a keyboard 32. Of course, the A-subscriber device 4 may comprise other components, such as a display.

As explained above, the A-subscriber device 4 should be capable of transmitting a personal identity code to the telephone system 2. The personal identity code can be made available in various ways.

In a first example, the personal identity code can be entered by the user using the keyboard 32. This code can be stored in the memory 31 and be made available for use when sending a request to establish a telephone connection to the telephone system 2.

In a second example, the personal identity code may be entered by the user of the A-subscriber device 4 with the keyboard 32 in combination with the telephone number of the B-subscriber device 6 with which a connection is sought.

In a third example, the personal identity code is already stored in the memory 31. Most telephone devices allow that the telephone device may be operated only after entering a personal identity number (PIN) or password. The personal identity code can be made available or retrieved from the memory 31 in dependence of entering the correct PIN or password. The personal identity code is available until a PIN or password should be entered again (e.g. if the telephone device has been switched off and on again). In this example, if multiple PINS or passwords are valid for various users of a single telephone device, several personal identity codes may be stored and made available, linked to the PIN or password, for a single device for multiple users.

Furthermore, the telephone device 4, 6 may be configured to transmit an access restriction signal to the telephone system 2 if the user of the telephone device perceives an incoming phone call as unsolicited or undesired. An access restriction signal may e.g. be transmitted by operating a dedicated key, a soft key related to a particular function indicated on a display of the telephone device or a special combination of keys.

It should be clear that further examples can be envisaged. The telephone device should be configured such that at least one personal identity code can be transmitted to the telephone system 2. The telephone device may also be configured to transmit a device code, such as the telephone number or related information.

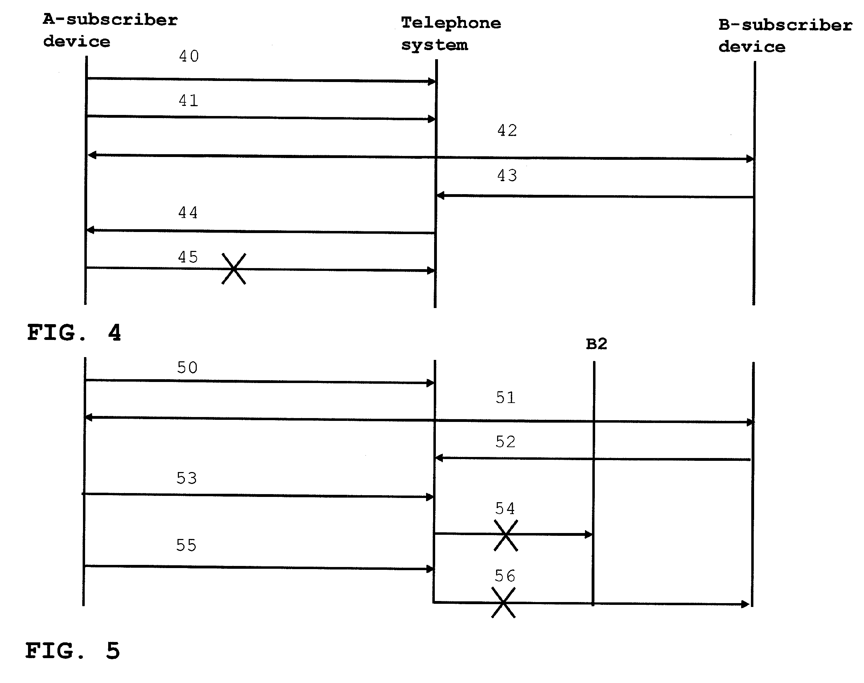

In the sequel of the description, some examples of the operation of the telephone system 2 will be given with reference to FIGS. 4-7. It should be appreciated that these examples, or the steps thereof, may be combined or applied in isolation.

In FIG. 4, in step 40 a request is received by the request receiver 13 of the telephone system 2 from the A-subscriber device 4 for establishing a telephone connection with the B-subscriber device 6. In step 41, the personal identity code of the user of the A-subscriber device 4 is also received by the identity code receiver 14. Of course, the personal identity code may be received before the request, simultaneously with the request or after the request for establishing a telephone connection. In response to receiving the personal identity code, the telephone connection with the B-subscriber device 6 is established in step 42 using the connection establisher 15.

If the user of the B-subscriber device 6 perceives the call as desired, the phone call is continued until either of the parties terminates the connection.

If the user of the B-subscriber device 6 perceives the call as unsolicited or undesired, the user of the B-subscriber device 6 may operate the device 6 to transmit an access restriction signal. The access restriction signal receiver 19 of the telephone system 2 receives the access restriction signal from the B-subscriber device 6 in step 43.

The telephone system 2 may restrict access to the user of the A-subscriber device 4 in various ways.

In FIG. 4, in response to receiving the access restriction signal, the access restrictor 20 blocks the access to the telephone system 2, indicated by the arrow 44, possibly after operating the assessor module 23 as described above. Access is restricted by flagging the personal identity code of the user of the A-subscriber device 4.

If the user of the A-subscriber device 4 attempts to make another call using the telephone system 2, the device used by this user should again transmit the personal identity code of this user. Upon determining that a flag exists for this particular identity code by the determination module 17, the connection preventor 22 prevents establishing of a telephone connection for this subsequent call, indicated by the cross in step 45.

In FIG. 5, step 50 indicates that the telephone system 2 receives the request from the A-subscriber device 4 for establishing a telephone connection with the B-subscriber device 6 in combination with the personal identity code of the user of the A-subscriber device 4. Step 51 indicates the establishment of the telephone connection, whereas step 52 again indicates receiving an access restriction signal from the B-subscriber device 6 by the access restriction signal receiver 19.

The form of access restriction to the telephone system 2 in FIG. 5 is different from FIG. 4 (and may thus be applied instead or in combination with the access restriction illustrated and described with reference to FIG. 4).

In FIG. 5, the access restriction signal from the B-subscriber device 6 triggers the telephone system 2 to prevent a connection with another B-subscriber device 6 (indicated as B2). If the user of the A-subscriber device 4, after one or more access restrictions signals have been received, tries to make another telephone call (either with the same telephone device or with another telephone device) to telephone device B2 in step 53, his request for connection and the personal identity code are received by the telephone system 2. The telephone system 2 determines that the user that was assigned the personal identity code has been flagged as having received one or more access restriction signals. As a consequence, the telephone connection with telephone device B2 is not established (indicated by the cross in step 54). Similarly, a new telephone connection with the B-subscriber device 6 can not be established (steps 55 and 56).

In contrast with the embodiment of FIG. 4, in the situation of FIG. 5, the user of the A-subscriber device 4 may still be able to establish a telephone connection with other telephone devices. Whereas access to the telephone device B2 in FIG. 5 has been restricted (e.g. because the telephone number of telephone device B2 was explicitly indicated by a user of the B-subscriber device 6 that transmitted the original access restriction signal upon determination in the telephone system 2), other telephone devices may still be called. As an example, the telephone system 2 in the embodiment of FIG. 5 may still enable the user of the A-subscriber device 4 to establish a telephone connection to emergency telephone numbers and/or to another selected group of numbers. On the other hand, the user of the A-subscriber device 4 may only be excluded from making a telephone connection with a selected group of telephone devices or devices of a particular group of users (possibly indicated by their personal identity codes). Of course, the selected group may involve all subscribers.

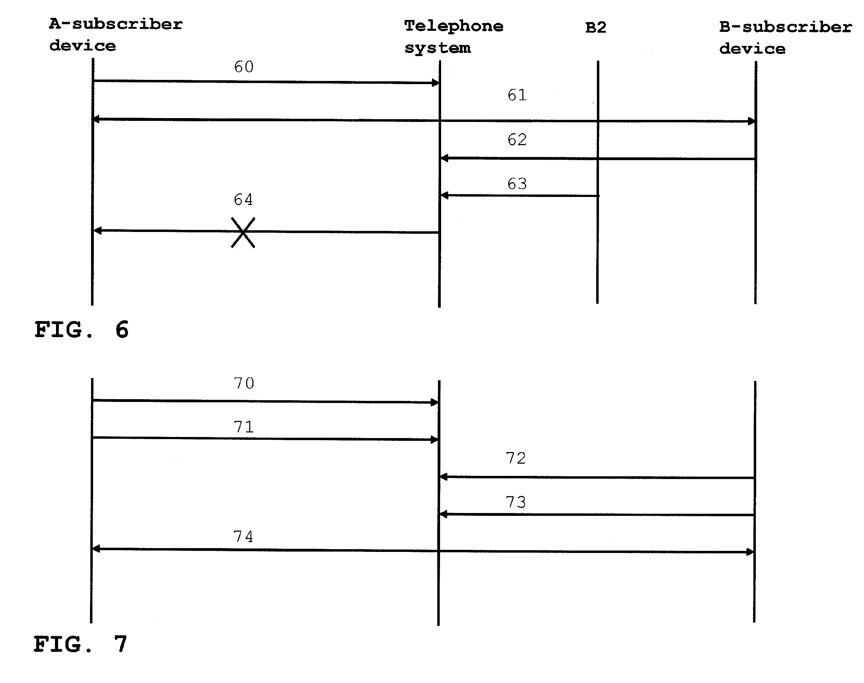

In FIG. 6, step 60 indicates that the telephone system 2 receives the request from the A-subscriber device 4 for establishing a telephone connection with the B-subscriber device 6 in combination with the personal identity code of the user of the

A-subscriber device 4. Step 61 indicates the establishmentof the telephone connection, whereas step 62 again indicates receiving an access restriction signal from the B-subscriber device 6 by the access restriction signal receiver 19.

The form of access restriction to the telephone system 2 in FIG. 6 is different from FIGS. 4 and 5 (and may thus be applied instead or in combination with the access restriction illustrated and described with reference to FIG. 4 and/or FIG. 5).

In the embodiment of FIG. 6, the user of the A-subscriber device 4 for which the original access restriction signal has been received is excluded from receiving telephone calls. If the user of the telephone device B2 attempts to make a telephone call to the user of the A-subscriber device 4 (step 63), the telephone system 2 will find a flag for the user of the telephone number of the A-subscriber device 4 (and possibly other telephone numbers). In reaction to this finding, the telephone system 2, more particularly the connection preventor 22, will prevent in step 64 a telephone connection to be established with the A-subscriber device 4 (or with the other telephone numbers stored in relation to the personal identity code of the user).

It should be appreciated that in the embodiments of FIGS. 4-6, the described access restriction may take place by the access restrictor 20 in response to receiving one or more access restriction signals by the access restriction signal receiver 19. In general, but particularly if only a single or a few access restriction signals are sufficient to restrict access for the user, the access restrictor 20 may be controlled by the assessor module 23 as described with reference to FIG. 2

Finally, FIG. 7 shows an embodiment using the approval module 26. It should be noted that this embodiment can be applied independently of the use of a personal identity code of the user of the A-subscriber device 4, although use of this code is illustrated in FIG. 7.

In FIG. 7, the user of A-subscriber device 4 may request establishing a telephone connection with the B-subscriber device 6. This request and the personal identity code of the user of the A-subscriber device 4 are received in steps 70 and 71. The approval module 26 interprets the request as a first approval signal for telephone communication with the user of the B-subscriber device 6. The connection establisher 15 does not yet actually establish the telephone connection, until a corresponding request is received from the B-subscriber device 6 (indicated by steps 72 and 73). This request is interpreted as a second approval signal for telephone communication with the user of the B-subscriber device 6. If both approval signals are received, the connection establisher 15 allows establishing a telephone connection between the A-subscriber device 4 and the B-subscriber device 6 (step 74). The telephone connection does not have to be established immediately.

The telephone system 2 may apply the timer 24 to set a validity period of the first approval signal. If the second approval signal is received in the validity period, the establishment of a telephone connection is allowed. In order to make the user of the other telephone device aware of the existence of the first approval signal, the telephone system 2 may apply a notification signal to alert the user of the B-subscriber device 6. The validity period may be set to e.g. one hour, one day, one week or two weeks.

## Claims

1. A method for establishing a telephone connection between a first subscriber device (A-subscriber device) and a second subscriber device (B-subscriber device) in a telephone system arranged for connecting said A-subscriber device and B-subscriber device, the method comprising the steps by the telephone system of:
- receiving a request from the A-subscriber device to establish a connection with the B-subscriber device;
- receiving a personal identity code of a user of said A-subscriber device;
- establishing said connection between said A-subscriber device and said B-subscriber device after receiving said personal identity code of said user of said A-subscriber device;
**characterized by** the steps of
- receiving one or more access restriction signals;
- restricting access to said telephone system for said user of said A-subscriber device in response to receiving said one or more access restriction signals.

2. The method according to claim 1, wherein said step of restricting access to said telephone system involves at least one of the following:
- terminating one or more co-existing connections
- preventing establishment, at least temporarily, of further connections.

3. The method according to claim 1 or 2, wherein said step of restricting access to said telephone system is dependent on at least one of the following:
- the number of times that access has been restricted for said user of said A-subscriber device;
- the number of access restriction signals that have been received for said user of said A-subscriber device;
- the telephone communication history between said user of said A-subscriber device and the user of said B-subscriber device from which said access restriction signal has been received.

4. The method according to one or more of the preceding claims, wherein said step of restricting access involves restricting access to said telephone system for a particular time period.

5. The method according to one or more of the preceding claims, wherein said telephone system is arranged for establishing a connection with a first B-subscriber device and with a second B-subscriber device, said method comprising the steps of:
- receiving said access restriction signal from said first B-subscriber device; and
- preventing said second B-subscriber device from receiving telephone calls from a user of said A-subscriber device in response to receiving said one or more access restriction signals.

6. The method according to one or more of the preceding claims, wherein said personal identity code of said user of said A-subscriber device is received in a secured manner by encrypting said personal identity code and/or by using a secure connection.

7. A computer program comprising software code portions adapted for, when installed in and executed by the telephone system, performing the method according to claims 1-6.

8. A carrier containing the computer program according to claim 7.

9. A telephone system adapted for establishing a telephone connection between a first subscriber device (A-subscriber device) and a second subscriber device (B-subscriber device), the telephone system comprising:
- a request receiver adapted for receiving a request from the A-subscriber device to establish a connection with the B-subscriber device;
- an identity code receiver adapted for receiving a personal identity code of a user of said A-subscriber device;
- a connection establisher adapted for establishing said connection between said A-subscriber device and said B-subscriber device after receiving said personal identity code of said user of said A-subscriber device;
**characterized by**
- an access restriction receiver adapted for receiving one or more access restriction signals;
- an access restrictor adapted to restrict access to said telephone system for said user of said A-subscriber device in response to receiving said one or more access restriction signals.

10. The telephone system according to claim 9 further comprising at least one of the following:
- a connection terminator adapted for terminating one or more co-existing connections with said A-subscriber device; and
- a connection preventor adapted for preventing establishment of further connections for said user of said A-subscriber device.

11. The telephone system according to claim 9 or 10, further comprising an assessor module adapted to control said access restrictor such that restricting access to said telephone system for said user of said A-subscriber device is dependent on at least one of the following:
- the number of times that access has been restricted for said user of said A-subscriber device;
- the number of access restriction signals that have been received for said user of said A-subscriber device;
- the telephone communication history between said user of said A-subscriber device and the user of said B-subscriber device from which said access restriction signal has been received.

12. The telephone system according to one or more of the preceding claims 9-11, wherein said telephone system is arranged to restrict access to said telephone system for a particular time period.

13. The telephone system according to one or more of the preceding claims 9-12, wherein said telephone system is arranged for establishing a connection with a first B-subscriber device and with a second B-subscriber device, comprising:
- an access restriction signal receiver adapted for receiving an access restriction signal from said first B-subscriber device; and
- an access preventor adapted for preventing said second B-subscriber device from receiving telephone calls from a user of said A-subscriber device in response to receiving said one or more access restriction signals.

14. The telephone system according to one or more of the claims 9-13, wherein said telephone system is arranged for receiving said personal identity code of said user of said A-subscriber device is received in a secured manner by encrypting said personal identity code and/or by using a secure connection.
